# EUROPÄISCHE PATENTSCHRIFT

(11) **EP 2 931 815 B1**
(45) Veröffentlichungstag und Bekanntmachung des Hinweises auf die Patenterteilung: **03.08.2016**
(21) Anmeldenummer: 13799561.9
(22) Anmeldetag: 04.12.2013
(51) Int. Cl.: C08L 101/10, C08L 71/02, C08K 5/54, C08G 77/14, C08G 77/26

(54) **VERNETZBARE MASSEN AUF BASIS VON ORGANYLOXYSILANTERMINIERTEN POLYMEREN**
CROSS-LINKABLE COMPOSITIONS BASED ON ORGANYLOXYSILANE-TERMINATED POLYMERS
COMPOSITIONS RÉTICULABLES À BASE DE POLYMÈRES À TERMINAISON ORGANYLOXYSILANE

(30) Priorität: 13.12.2012 DE 102012223139
(43) Veröffentlichungstag der Anmeldung: 21.10.2015
(73) Patentinhaber: Wacker Chemie AG, 81737 München (DE)
(72) Erfinder: STANJEK, Volker, 84539 Ampfing (DE); ZANDER, Lars, 84503 Altötting (DE)
(74) Vertreter: Budczinski, Angelika
(86) Internationale Anmeldenummer: PCT/EP2013/075558
(87) Internationale Veröffentlichungsnummer: WO 2014/090659

(56) Entgegenhaltungen:
- EP-A1- 1 179 571
- EP-A1- 1 832 626
- EP-A1- 1 939 256

## Beschreibung

Die Erfindung betrifft vernetzbare Massen von silanvernetzenden Prepolymeren, Verfahren zu deren Herstellung und deren Verwendung als Kleb- und Dichtstoffe, insbesondere zum Verkleben von Substraten.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. Eine der wichtigsten Anwendungen von derartigen Materialien ist die Herstellung von Klebstoffen, insbesondere von elastischen Klebesystemen.

So zeigen Klebstoffe auf Basis von alkoxysilanvernetzenden Polymeren im ausgehärteten Zustand sehr gute mechanische Eigenschaften, da sie sowohl reißfest als auch hochelastisch sein können. Ein weiterer entscheidender Vorteil silanvernetzender Systeme gegenüber zahlreichen anderen Kleb- und Dichtstofftechnologien (z.B. gegenüber isocyanatvernetzenden Systemen) ist die toxikologische Unbedenklichkeit der Prepolymere. Dabei werden in vielen Anwendungen einkomponentige Systeme (1K-Systeme) bevorzugt, die bei Kontakt mit Luftfeuchtigkeit aushärten. Nachteilig an vielen Systemen entsprechend des Standes der Technik ist insbesondere die geringe Reaktivität, was eine aggressive Katalyse erforderlich macht. Die entsprechenden Mischungen enthalten daher typischerweise erhebliche Mengen toxikologisch bedenklicher Zinnkatalysatoren.

Hier ist der Einsatz von sogenannten α-silanterminierten Prepolymeren von Vorteil, die über reaktive Alkoxysilylgruppen verfügen, die durch einen Methylenspacer mit einer benachbarten Urethaneinheit verbunden sind. Diese Verbindungsklasse ist hochreaktiv und benötigt weder Zinnkatalysatoren noch starke Säuren oder Basen, um bei Luftkontakt hohe Aushärtgeschwindigkeiten zu erreichen. Kommerziell verfügbare α-silanterminierte Prepolymere sind GENIOSIL STP-E10 oder -E30 der Fa. Wacker-Chemie AG.

Sämtliche silanvernetzenden Klebstoffe besitzen jedoch den Nachteil, nicht auf allen Materialien eine hinreichend gute Haftung aufzuweisen. Insbesondere ist die Haftung unter feuchten Bedingungen, insbesondere die Haftung nach einer Kaltwasserlagerung. Hier treten Haftungsprobleme oftmals auch bei Untergründen wie beschichteten Stählen, Edelstählen oder eloxierten Metallen oder sogar Glas auf, auf denen unter trockenen Bedingungen meist eine gute oder zumindest zufriedenstellende Haftung erreicht werden kann.

Verstärkt treten diese Probleme bei Klebstoffen auf, die nach ihrer Aushärtung eine Reißfestigkeit gemessen nach DIN EN 14293 und/oder DIN EN 53504 von mindestens 1 MPa aufweisen. So stellen insbesondere diese reißfesten Klebstoffe für mechanisch entsprechend beanspruchte Klebenähte hohe Anforderungen an die Haftung, da sie beim Auftreten hoher Zugkräfte nicht nur nicht reißen sondern sich selbstverständlich auch nicht vom Untergrund ablösen dürfen.

Zwar kann das Haftungsprofil von reißfesten Klebstoffen durch den Zusatz von organofunktionellen Silanen verbessert werden, wobei u.a. die Kombination von aminoalkyl- mit glycidoxyalkylfunktionellen Alkoxysilanen als besonders vorteilhafte Kombination von Haftvermittlern beschrieben wird, z.B. in EP 1 179 571, EP 1 832 626 oder EP 1 939 256. Wie in WO 2007/131986 beschrieben, kann man auch andere Eigenschaften, wie z.B. die Rückstellung, durch derartige Silankombinationen positiv beeinflussen. Die Haftung nach einer Kaltwasserlagerung hingegen kann auf diese Weise nicht hinreichend verbessert werden.

Gegenstand der Erfindung sind vernetzbare Massen (K) enthaltend
(A) 100 Gewichtsteile Verbindungen der Formel

   Y-[(CR¹₂)_{b}-SiRₐ(OR²)₃₋ₐ]ₓ (I),

   wobei
   - Y: einen x-wertigen, über Stickstoff, Sauerstoff, Schwefel oder Kohlenstoff gebundenen Polymerrest bedeutet,
   - R: gleich oder verschieden sein kann und einen einwertigen, gegebenenfalls substituierten, SiC-gebundenen Kohlenwasserstoffrest darstellt,
   - R¹: gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
   - R²: gleich oder verschieden sein kann und Wasserstoffatom oder einen einwertigen, gegebenenfalls substituierten Kohlenwasserstoffrest darstellt,
   - x: eine ganze Zahl von 1 bis 10, bevorzugt 1, 2 oder 3, besonders bevorzugt 1 oder 2, ist,
   - a: gleich oder verschieden sein kann und 0, 1 oder 2, bevorzugt 0 oder 1, ist und
   - b: gleich oder verschieden sein kann und eine ganze Zahl von 1 bis 10, bevorzugt 1, 3 oder 4, besonders bevorzugt 1 oder 3, insbesondere 1, ist,
(B) 0,1 bis 30 Gewichtsteile Organosiliciumverbindungen enthaltend Einheiten der Formel

   DSi(OR³)_{d}R⁴ₑO_{(3-d-e)/2} (II),

   worin
   - D: einen einwertigen, SiC-gebundenen Rest mit basischem Stickstoff bedeutet,
   - R³: gleich oder verschieden sein kann und Wasserstoffatom oder gegebenenfalls substituierte Kohlenwasserstoffreste bedeutet,
   - R⁴: gleich oder verschieden sein kann und einen unsubstituierten oder halogensubstituierten, SiC-gebundenen Alkylrest mit 1 bis 8 Kohlenstoffatomen bedeutet,
   - d: 0, 1, 2 oder 3, bevorzugt 1, 2 oder 3, besonders bevorzugt 2 oder 3, ist und
   e 0, 1, 2 oder 3, bevorzugt 1 oder 0, ist,
   wobei die Summe aus d+e kleiner oder gleich 3 ist und pro Molekül mindestens ein Rest (OR³) anwesend ist,
(C) 0,1 bis 30 Gewichtsteile Organosiliciumverbindungen enthaltend Einheiten der Formel

   ES i(OR⁵)_{g}R⁶ₕO_{(3-g-h)/2} (III),

   worin
   - E: gleich oder verschieden sein kann und einen einwertigen, SiC-gebundenen Rest mit einer Epoxyfunktion bedeutet,
   - R⁵: gleich oder verschieden sein kann und Wasserstoffatom oder gegebenenfalls substituierte Kohlenwasserstoffreste bedeutet,
   - R⁶: gleich oder verschieden sein kann und einen unsubstituierten oder halogensubstituierten, SiC-gebundenen Alkylrest mit 1 bis 8 Kohlenstoffatomen bedeutet,
   - g: 0, 1, 2 oder 3, bevorzugt 1, 2 oder 3, besonders bevorzugt 2 oder 3, ist und
   - h: 0, 1, 2 oder 3, bevorzugt 1 oder 0, ist,
   wobei die Summe aus g+h kleiner oder gleich 3 ist und pro Molekül mindestens ein Rest (OR⁵) anwesend ist,
   mit der Maßgabe, dass mindestens 15 %, bevorzugt mindestens 25 %, besonders bevorzugt mindestens 35 %, insbesondere mindestens 45 %, aller Si-Atome in den Komponenten (B) und (C) zu Einheiten der Formeln (II) oder (III) gehören mit e oder h gleich 1,
   und mindestens eine weitere Komponente, ausgewählt aus den Komponenten
(D) 0,1 bis 30 Gewichtsteile Alkoxysilane, die von Komponenten (B) und (C) verschieden sind, und
(E) 1 bis 500 Gewichtsteile Siliconharze, die von Komponenten (B) und (C) verschieden sind, enthaltend Einheiten der Formel

   R⁷ᵢ(R⁸O)ⱼSiO_{(4-i-j)/2} (IV),

   wobei
   - R⁷: gleich oder verschieden sein kann und Wasserstoffatom oder einen einwertigen, SiC-gebundenen, gegebenenfalls substituierten Kohlenwasserstoffrest bedeutet,
   - R⁸: gleich oder verschieden sein kann und Wasserstoffatom oder einen einwertigen, gegebenenfalls substituierten Kohlenwasserstoffrest bedeutet,
   - i: 0, 1, 2 oder 3 ist und
   - j: 0, 1, 2 oder 3, bevorzugt 0, 1 oder 2, ist,
   mit der Maßgabe, dass die Summe aus i+j kleiner oder gleich 3 ist und in mindestens 50 %, bevorzugt mindestens 60 %, der Einheiten der Formel (IV) i gleich 0 oder 1 ist.

Der Erfindung liegt vor allem die Entdeckung zugrunde, dass die Kombination von aminoalkylfunktionellen und epoxyfunktionellen Silanen und/oder Siloxanen insbesondere dann unter den Bedingungen einer Kaltwasserlagerung zu einer Verbesserung der Haftung führt, wenn ein signifikanter Teil aller in der Kombination enthaltenen Siliciumeinheiten eine amino- oder eine epoxyfunktionelle Einheit und einen SiC-gebundenen, gegebenenfalls halogensubstituierten Alkylrest aufweist.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom und Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Bei Polymerrest Y handelt es sich bevorzugt um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen, Polyethylen oder Polypropylen und Copolymere von Polyisobutylen mit Isopren; Polyisoprene; Polyurethane; Polyester; Polyamide; Polyacrylate; Polymethacrylate; und Polycarbonate enthalten und die vorzugsweise über -O-C(=O)-NH-, -NH-C(=O)O-, -NH-C(=O)-NH-, -NR'-C(=O)-NH-, NH-C(=O)-NR'-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O- und -NR'- an die Gruppe bzw. Gruppen - (CR¹₂)_{b}-SiRₐ(OR²)₃₋ₐ] gebunden sind, wobei R' gleich oder verschieden sein kann und eine für R angegebene Bedeutung hat oder für eine Gruppe -CH(COOR")-CH₂-COOR" steht, in der R" gleich oder verschieden sein kann und eine für R angegebene Bedeutung hat.

Beispiele für Reste R' sind Cyclohexyl-, Cyclopentyl-, n- und iso-Propyl-, n-, iso- und t-Butylreste, die diversen Stereoisomere des Pentylrests, Hexylrests oder Heptylrests sowie der Phenylrest.

Bei Rest R' handelt es sich vorzugsweise um eine Gruppe -CH(COOR")-CH₂-COOR" oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen.

Bei den Resten R" handelt es sich vorzugsweise um Alkylgruppen mit 1 bis 10 Kohlenstoffatomen, besonders bevorzugt um Methyl-, Ethyl- oder Propylreste.

Besonders bevorzugt handelt es sich bei Rest Y in Formel (I) um Polyurethanreste und Polyoxyalkylenreste, insbesondere um polyoxypropylenhaltige Polyurethanreste oder Polyoxypropylenreste.

Die Verbindung der Formel (I) kann dabei die auf die beschriebene Weise angebundenen Gruppen -[(CR¹₂)_{b}-SiRₐ(OR²)₃₋ₐ] an beliebigen Stellen im Polymer aufweisen, wie etwa kettenständig und/oder endständig, bevorzugt kettenständig und endständig, besonders bevorzugt endständig.

Sofern Y für Polyurethanreste steht, handelt es sich bevorzugt um solche, deren Kettenenden über -NH-C(=O)O-, -NH-C(=O)-NH-, -NR'-C(=O)-NH- oder -NH-C(=O)-NR'-, insbesondere über -O-C(=O)-NH- oder -NH-C(=O)-NR'-, an die Gruppe bzw. Gruppen -[(CR¹₂)_{b}-SiRₐ(OR²)₃₋ₐ] gebunden sind, wobei sämtliche Reste und Indizes eine der o.g. Bedeutungen haben. Die Polyurethanreste Y sind dabei vorzugsweise aus linearen oder verzweigten Polyoxyalkylenen, insbesondere aus Polypropylenglycolen, und Di- oder Polyisocyanaten herstellbar. Die Reste Y weisen dabei vorzugsweise zahlenmittlere Molmassen Mₙ von 10 000 bis 30 000 g/mol, besonders bevorzugt von 11 000 bis 20 000 g/mol, auf. Geeignete Verfahren zur Herstellung entsprechender Verbindungen (A) sowie auch Beispiele für die Verbindungen (A) selbst sind unter anderen in EP 1 093 482 B1 (Absätze [0014]-[0023], [0039]-[0055] sowie Beispiel 1 und Vergleichsbeispiel 1) und EP 1 641 854 B1 (Absätze [0014]-[0035], Beispiele 4 und 6 sowie die Vergleichsbeispiele 1 und 2) beschrieben, die zum Offenbarungsgehalt der vorliegenden Anmeldung zu zählen sind.

Sofern Y für Polyoxyalkylenreste steht, handelt es sich bevorzugt um lineare oder verzweigte Polyoxyalkylenreste, besonders bevorzugt um Polyoxypropylenreste, deren Kettenenden vorzugsweise über -O-C(=O)-NH- an die Gruppe bzw. Gruppen -[(CR¹₂)_{b}-SiRₐ(OR²)₃₋ₐ] gebunden sind, wobei sämtliche Reste und Indizes eine der o.g. Bedeutungen haben. Die Polyoxyalkylenreste Y weisen vorzugsweise zahlenmittlere Molmassen Mₙ von 10 000 bis 30 000 g/mol, besonders bevorzugt von 11 000 bis 22 000 g/mol, auf. Geeignete Verfahren zur Herstellung der entsprechenden Verbindungen (A) sowie auch Beispiele für die Verbindungen (A) selbst sind in unter anderem in EP 1 535 940 B1 (Absätze [0005]-[0025] sowie Beispiele 1-3 und Vergleichsbeispiel 1-4) und EP 1 896 523 B1 (Absätze [0008]-[0047]) beschrieben, die zum Offenbarungsgehalt der vorliegenden Anmeldung zu zählen sind.

Die zahlenmittlere Molmasse Mₙ ist dabei mittels Size Exclusion Chromatography (SEC) gegen Polystyrol-Standard, in THF, bei 60 °C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmbar.

Bei den Endgruppen der erfindungsgemäß eingesetzten Verbindungen der Formel (I) handelt es sich vorzugsweise um solche der allgemeinen Formeln

-NH-C(=O)-NR'-(CR¹₂)_{b}-SiRₐ(OR²)₃₋ₐ (V)

oder

-O-C(=O)-NH-(CR¹₂)_{b}-SiRₐ(OR²)₃₋ₐ (VI),

wobei die Reste und Indizes eine der oben dafür angegebenen Bedeutungen haben.

Bei den Endgruppen der erfindungsgemäß eingesetzten Verbindungen der Formel (I) handelt es sich besonders bevorzugt um solche der Formel (VI).

Bevorzugt handelt es sich bei Komponente (A) um silanterminierte Polyoxyalkylene, besonders bevorzugt um silanterminierte Polyoxypropylene, mit Endgruppen der Formel (VI), wobei R¹ für Wasserstoffatom, R für Methylrest, R² für Methyl- oder Ethylrest, b für 1 oder 3 und a für 0 oder 1 steht. Die silanterminierten Polyoxyalkylene weisen dabei außer den Endgruppen (VI) vorzugsweise ausschließlich Polyethereinheiten auf. Vorzugsweise besitzen die erfindungsgemäßen Polymere (A) pro Molekül 2 oder 3, besonders bevorzugt 2, Endgruppen der Formel (VI).

Ein großer Vorteil von silanterminierten Polyoxyalkylenen mit Endgruppen der Formel (VI) gegenüber von silanterminierten Polyoxyalkylenen mit anderen Endgruppen stellt ihre einfache Herstellbarkeit durch eine Umsetzung von gängigen, mit Hydroxylgruppen terminierten Polyoxyalkylenen und Silanen der Formel

OCN- (CR¹₂)_{b}-SiRₐ(OR²)₃₋ₐ (VII)

dar, wobei alle Reste und Indizes eine der oben genannten Bedeutungen haben. Entscheidend ist dabei, dass durch diese Reaktion eine weitgehend vollständige Terminierung der vorhandenen Kettenenden gelingt, womit sich die aus diesem Verfahren resultierenden Produkte signifikant von den Produkten anderer Verfahren, wie z.B. einer Hydrosilylierung von α,ω-ungesättigten Polymeren mit SiH-funktionellen Silanen, unterscheidet.

Diese weitgehend vollständige Terminierung führt überraschenderweise zu deutlich besseren Eigenschaften, insbesondere zu deutlich besseren Reißfestigkeiten der die Polymere (A) enthaltenden ausgehärteten Massen (K) im Vergleich zu Polymeren, deren Endgruppen auf anderem Wege, z.B. über Hydrosilylierung, hergestellt worden sind.

Bei den silanterminierten Polymeren (A) handelt es sich bevorzugt um solche, deren Kettenenden mindestens zu 85 %, besonders bevorzugt mindestens zu 90 %, insbesondere mindestens zu 95 %, mit Endgruppen der Formel (VI) terminiert sind. Insbesondere werden als Verbindungen (A) lineare Polyoxypropylene bevorzugt, deren Ketten mindestens zu 85 %, besonders bevorzugt mindestens zu 90 %, insbesondere mindestens zu 95 %, mit Endgruppen der Formel (VI) terminiert sind.

Die zahlenmittleren Molekulargewichte Mₙ der Verbindungen der Formel (I) betragen vorzugsweise mindestens 10 000 g/mol, besonders bevorzugt mindestens 11 000 g/mol, und vorzugsweise höchstens 30 000 g/mol, besonders bevorzugt höchstens 24 000 g/mol, insbesondere höchstens 22 000 g/mol.

Die Viskosität der Verbindungen (A) beträgt vorzugsweise mindestens 0,2 Pas, bevorzugt mindestens 1 Pas, besonders bevorzugt mindestens 5 Pas, und vorzugsweise höchstens 700 Pas, bevorzugt höchstens 100 Pas, jeweils gemessen bei 20 °C.

Die erfindungsgemäß eingesetzte Komponente (A) können nur eine Art von Verbindung der Formel (I) enthalten wie auch Gemische unterschiedlicher Arten von Verbindungen der Formel (I). Dabei kann Komponente (A) ausschließlich Verbindungen der Formel (I) enthalten, in denen mehr als 90 %, bevorzugt mehr als 95 %, besonders bevorzugt mehr als 98 %, aller an den Rest Y gebundenen Silylgruppen identisch sind. Es kann dann aber auch eine Komponente (A) eingesetzt werden, die zumindest zum Teil aus Verbindungen der Formel (I) besteht, bei denen an einen Rest Y unterschiedliche Silylgruppen gebunden sind. Schließlich können als Komponente (A) auch Gemische verschiedener Verbindungen der Formel (I) eingesetzt werden, in denen insgesamt mindestens 2 unterschiedliche Arten von an Reste Y gebundene Silylgruppen vorhanden sind, wobei jedoch sämtliche an jeweils einen Rest Y gebundenen Silylgruppen identisch sind.

Falls es sich bei Komponente (A) um verschiedene Arten von Verbindungen der Formel (I) handelt, sind Mischungen, die sowohl Verbindungen (A1) mit Endgruppen der Formel (V) oder (VI), bei denen b = 1 und R¹ = H bedeutet und a = 0 oder 1 ist, enthalten, als auch Verbindungen (A2) mit Endgruppen der Formel (V) oder (VI), bei denen b = 3 und R¹ = H bedeutet und a = 0 ist, bevorzugt und solche besonders bevorzugt, in denen das Gewichtsverhältnis von (A1) zu (A2) 0,1 bis 10, vorzugsweise 0,2 bis 5, beträgt.

In einer bevorzugten Ausführungsform der Erfindung wird als Komponente (A) eine Mischung aus verschiedenen Verbindungen der Formel (I) eingesetzt, die mindestens eine Verbindung (A1) mit Endgruppen der Formel (VI), bei denen b = 1, R¹ = H, a = 1 und R² = CH₃ ist, und mindestens eine Verbindung (A2) mit Endgruppen der Formel (VI), bei denen b = 3, R¹ = H, a = 0 und R² = CH₃ ist, enthält, mit einem Gewichtsverhältnis von (A1) zu (A2) von bevorzugt 0,1 bis 10, besonders bevorzugt von 0,2 bis 5.

Die erfindungsgemäß eingesetzten Verbindungen (A) sind handelsübliche Produkte oder können nach in der Chemie gängigen Verfahren hergestellt werden.

Bezogen auf 100 Gewichtsteile der Komponente (A) enthalten die erfindungsgemäßen Massen (K) vorzugsweise 0,2 bis 20 Gewichtsteile, besonders bevorzugt 0,5 bis 15 Gewichtsteile, Komponente (B).

Bei den erfindungsgemäß eingesetzten Organosiliciumverbindungen (B) kann es sich sowohl um Silane handeln, d.h. Verbindungen der Formel (II) mit d+e=3, als auch um Siloxane, d.h. Verbindungen enthaltend Einheiten der Formel (II) mit d+e≤2.

Organosiloxane (B) können aus Einheiten der Formel (II) bestehen oder weitere Einheiten wie z.B. Diorganylsiloxy-Einheiten, enthalten. Falls es sich bei Komponente (B) um Organosiloxane handelt, bestehen diese vorzugsweise ausschließlich aus Einheiten der Formel (II).

Bevorzugt handelt es sich bei Komponente (B) um Silane der Formel (II) und/oder deren Teilhydrolysate.

Falls es sich bei Komponente (B) um Teihydrolysate der Silane der Formel (II) handelt, sind solche mit einer mittleren Molekulargewicht Mₙ von < 2000 g/mol bevorzugt und von < 1000 g/mol besonders bevorzugt.

Beispiele für gegebenenfalls substituierte Kohlenwasserstoffreste R³ und R⁴ sind die für Rest R angegebenen Beispiele.

Bei den Resten R³ handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Methyl- und Ethylrest.

Bei Rest R⁴ handelt es sich vorzugsweise um Kohlenwasserstoffreste mit 1 bis 5 Kohlenstoffatomen, insbesondere um den Methylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C_{7H15}NH(CH₂)₃-, H₂N(CH₂)₄-, H₂N-CH₂-CH(CH₃)-CH₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C7H₁₅NH(CH₂)-, cyclo-C₅H₉NH(CH₂)-, cyclo-C₆H₁₁NH(CH₂)-, Phenyl-NH(CH₂)-, (CH₃)₂N(CH₂)-, (C₂H₅)₂N(CH₂)-, (CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃)Si(CH₂)₃NH(CH₂)₃-.

Bevorzugt handelt es sich bei Rest D um den H₂N(CH₂)₃- oder den H₂N(CH₂)₂NH(CH₂)₃-Rest.

Beispiele für die erfindungsgemäß eingesetzten Verbindungen enthaltend Einheiten der Formel (II) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃, cyclo-C₆H₁₁NH(CH₂)₃-Si(OH)₂CH₃, Phenyl-NH(CH₂)₃-Si(OCH₃)₃, Phenyl-NH(CH₂)₃-Si(OC₂H₅)₃, Phenyl-NH(CH₂)₃-Si(OCH₃)₂CH₃, Phenyl-NH(CH₂)₃-Si(OC₂H₅)₂CH₃, Phenyl-NH(CH₂)₃-Si(OH)₃, Phenyl-NH(CH₂)₃-Si(OH)₂CH₃, HN((CH₂)₃-Si(OCH₃)₃)₂, HN((CH₂)₃-Si(OC₂H₅)₃)₂HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-C6H₁₁NH(CH₂)-Si(OCH₃)₂CH₃, cyclo-C₆H₁₁NH(CH₂)-Si(OC₂H₅)₂CH₃, cyclo-C₆H₁₁NH(CH₂)-Si(OH)₃, cyclo-C₆H₁₁NH(CH₂)-Si(OH)₂CH₃, Phenyl-NH(CH₂)-Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, Phenyl-NH(CH₂)-Si(OH)₃ und Phenyl-NH(CH₂)-Si(OH)₂CH₃ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(C₂H₅)₂CH₃ sowie jeweils deren Teilhydrolysate bevorzugt und H₂N(CH₂)₂NH(CH₂)₃-Si(OCH₃)₂CH₃, H₂N(CH₂)₂NH(CH₂)₃-Si(C₂H₅)₂CH₃ sowie jeweils deren Teilhydrolysate besonders bevorzugt sind.

Die erfindungsgemäß eingesetzten Organosiliciumverbindungen (B) können in den erfindungsgemäßen Massen (K) sowohl die Funktion eines Haftvermittlers wie auch die eines Härtungskatalysators oder Härtungscokatalysators übernehmen.

Die erfindungsgemäß eingesetzten Organosiliciumverbindungen (B) sind handelsübliche Produkte bzw. nach in der Chemie gängigen Verfahren herstellbar.

Bezogen auf 100 Gewichtsteile der Komponente (A) enthalten die erfindungsgemäßen Massen (K) vorzugsweise 0,2 bis 20 Gewichtsteile, besonders bevorzugt 0,5 bis 10 Gewichtsteile, Komponente (C).

Bei den erfindungsgemäß gegebenenfalls eingesetzten Organosiliciumverbindungen (C) kann es sich sowohl um Silane handeln, d.h. Verbindungen der Formel (III) mit g+h=3, als auch um Siloxane, d.h. Verbindungen enthaltend Einheiten der Formel (III) mit g+h≤2.

Organosiloxane (C) können aus Einheiten der Formel (III) bestehen oder weitere Einheiten wie z.B. Diorganylsiloxy-Einheiten, enthalten. Falls es sich bei Komponente (C) um Organosiloxane handelt, bestehen diese vorzugsweise ausschließlich aus Einheiten der Formel (III).

Bevorzugt handelt es sich bei Komponente (C) um Silane der Formel (III) und/oder deren Teilhydrolysate.

Falls es sich bei Komponente (C) um Teilhydrolysate der Silane der Formel (III) handelt, sind solche mit einer mittleren Molekulargewicht Mₙ von < 2000 g/mol bevorzugt und von < 1000 g/mol besonders bevorzugt.

Beispiele für gegebenenfalls substituierte Kohlenwasserstoffreste R⁵ und R⁶ sind die für Rest R angegebenen Beispiele.

Bei den Resten R⁵ handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um den Methyl- und Ethylrest.

Bei Rest R⁶ handelt es sich vorzugsweise um Kohlenwasserstoffreste mit 1 bis 5 Kohlenstoffatomen, insbesondere um den Methylrest.

Bei dem Rest E handelt es vorzugsweise um Reste der Formeln 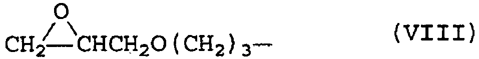 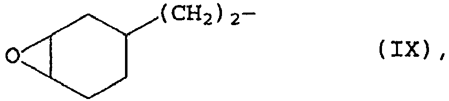 besonders bevorzugt um Reste der Formel (VIII).

Beispiele für die erfindungsgemäß eingesetzten Verbindungen enthaltend Einheiten der Formel (III) sind 2-(3,4-Epoxycyclohexyl)ethyl-trimethoxysilan, 2-(3,4-Epoxycyclohexyl)ethyl-triethoxysilan, 2-(3,4-Epoxycyclohexyl)ethyl-methyldimethoxysilan, 2-(3,4-Epoxycyclohexyl)ethylmethyldiethoxysilan, Glycidoxypropyl-trimethoxysilan, Glycidoxypropyl-triethoxysilan, Glycidoxypropyl-methyldimethoxysilan oder Glycidoxypropyl-methyldiethoxysilan sowie deren Teilhydrolysate, wobei Glycidoxypropyl-trimethoxysilan, Glycidoxypropyltriethoxysilan, Glycidoxypropyl-methyldimethoxysilan oder Glycidoxypropyl-methyldiethoxysilan sowie jeweils deren Teilhydrolysate bevorzugt und Glycidoxypropyl-methyldimethoxysilan oder Glycidoxypropyl-methyldiethoxysilan sowie jeweils deren Teilhydrolysate besonders bevorzugt sind.

Die erfindungsgemäß eingesetzten Organosiliciumverbindungen (C) sind handelsübliche Produkte bzw. nach in der Chemie gängigen Verfahren herstellbar.

Die Art der Komponenten (B) und (C) wird erfindungsgemäß mit der Maßgabe gewählt, dass mindestens 15 % aller Si-Atome in den Komponenten (B) und (C) zu Einheiten der Formeln (II) oder (III) gehören mit e oder h gleich 1. Dabei ist es unerheblich, ob Komponenten (B) enthaltend Einheiten der Formel (II) mit e=1 oder Komponenten (C) enthaltend Einheiten der Formel (III) mit h=1 oder aber beide eingesetzt werden, solange die oben genannte Maßgabe erfüllt ist.

Die erfindungsgemäßen Massen (K) enthalten zusätzlich zu den Komponenten (A), (B) und (C) noch Komponente (D) und/oder Komponente (E).

Sofern die erfindungsgemäßen Massen (K) Komponente (D) enthalten, handelt es sich um Mengen von vorzugsweise 0,2 bis 20 Gewichtsteile, besonders bevorzugt 0,5 bis 10 Gewichtsteile, jeweils bezogen auf 100 Gewichtsteile der Komponente (A).

Beispiele für gegebenenfalls eingesetzte Komponente (D) sind Tetraalkoxysilane wie Tetraethoxysilan, Alkylalkoxysilane wie Methyltrimethoxysilan, Methyltriethoxysilan, Propyltrimethoxysilan, Propyltriethoxysilan, Propylmethyldimethoxysilan oder Propylmethyldiethoxysilan,
n- oder i-Hexyltrimethoxysilan, n- oder i-Hexyltriethoxysilan, n- oder i-Hexylmethyldimethoxysilan, n- oder i-Hexylmethyldiethoxysilan, oder auch die entsprechenden n- oder i-Octyl-, n-Decyl-, n-Dodecyl-, n-Tetradecyl- oder n-Hexadecylalkoxysilane,
Phenylsilane wie Phenyltrimethoxysilan, Phenyltriethoxysilan, Phenylmethyldimethoxysilan oder Phenylmethyldiethoxysilan,
Vinylsilane wie Vinyltrimethoxysilan, Vinyltriethoxysilan, Vinylmethyldimethoxysilan oder Vinylmethyldiethoxysilan,
carbamatfunktionelle Silane wie O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, 3-(O-Methylcarbamato)propyl-methyldimethoxysilan, 3-(O-Methylcarbamato)propyl-trimethoxysilan, 3-(O-Ethylcarbamato)propyl-methyldiethoxysilan oder 3-(O-Ethylcarbamato)propyl-triethoxysilan,
(meth-)acrylfunktionelle Silane wie 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethylmethyldimethoxysilane, Acryloxymethyl-triethoxysilan oder Acryloxymethyl-methyldiethoxysilan,
und auch Silane mit anderen Funktionalitäten, außer Reste mit basischem Stickstoff und Epoxyreste, wie N-2-(3-Triethoxysilylpropyl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyldimethoxysilylmethyl)-harnstoff, N-(3-Triethoxysilylmethyl)-harnstoff oder N-(3-Methyldiethoxysilylmethyl)harnstoff,
wobei Tetraethoxysilan und Vinylsilane wie Vinyltrimethoxysilan, Vinyltriethoxysilan, Vinylmethyldimethoxysilan oder Vinylmethyldiethoxysilan bevorzugt und Vinyltrimethoxysilan und Vinyltriethoxysilan besonders bevorzugt sind.

Erfindungsgemäß gegebenenfalls eingesetzte Komponente (E) besteht vorzugsweise zu mindestens 90 Gew.-% aus Einheiten der Formel (IV). Besonders bevorzugt besteht Komponente (E) ausschließlich aus Einheiten der Formel (IV).

Beispiele für Reste R⁷ sind die oben für R angegebenen Beispiele.

Bevorzugt handelt es sich bei Rest R⁷ um gegebenenfalls mit Halogenatomen substituierte, einwertige, SiC-gebundene aliphatische oder aromatische Kohlenwasserstoffreste mit 1 bis 18 Kohlenstoffatomen, besonders bevorzugt um den Methyl- oder Phenylrest.

Vorzugsweise weisen in Komponente (E) mindestens 30 %, bevorzugt mindestens 50 %, insbesondere mindestens 60 %, der Einheiten der Formel (IV) einen Phenylrest auf.

Beispiele für Rest R⁸ sind Wasserstoffatom oder die für Rest R angegebenen Beispiele.

Bevorzugt handelt es sich bei Rest R⁸ um Wasserstoffatom oder gegebenenfalls mit Halogenatomen substituierte Alkylreste mit 1 bis 10 Kohlenstoffatomen, besonders bevorzugt um den Methyl- und Ethylrest.

Beispiele für Komponente (E) sind Organopolysiloxanharze, die im Wesentlichen, vorzugsweise ausschließlich, aus Q-Einheiten der Formeln SiO_{4/2}, Si(OR⁸)O_{3/2}, Si(OR⁸)₂O_{2/2} und Si(OR⁸)₃O_{1/2}, T-Einheiten der Formeln PhSiO_{3/2}, PhSi(OR⁸)O_{2/2} und PhSi(OR⁸)₂O_{1/2}, D-Einheiten der Formeln Me₂SiO_{2/2} und Me₂Si(OR⁸)O_{1/2} sowie M-Einheiten der Formel Me₃SiO_{1/2} bestehen, wobei Me für einen Methylrest, Ph für einen Phenylrest und R⁸ die oben angegebene Bedeutung hat, insbesondere Methylrest, wobei das Harz pro Mol T-Einheiten bevorzugt 0 bis 2 Mol Q-Einheiten, 0 bis 2 Mol D-Einheiten und 0 bis 2 Mol M-Einheiten enthält.

Bevorzugte Beispiele für Komponenten (E) sind Organopolysiloxanharze, die im Wesentlichen, vorzugsweise ausschließlich, aus T-Einheiten der Formeln PhSiO_{3/2}, PhSi(OR⁸)O_{2/2} und PhSi(OR⁸)₂O_{1/2}, gegebenenfalls T-Einheiten der Formeln MeSiO_{3/2}, MeSi(OR⁸)O_{2/2} und MeSi(OR⁸)₂O_{1/2} sowie gegebenenfalls D-Einheiten der Formeln Me₂SiO_{2/2} und Me₂Si(OR⁸)O_{1/2} bestehen, wobei Me für einen Methylrest, Ph für einen Phenylrest und R⁸ die oben angegebene Bedeutung hat, insbesondere Methylrest, mit einem molaren Verhältnis von Phenylsilicon- zu Methylsilicon-Einheiten von bevorzugt 0,5 bis 5,0. Der Gehalt an D-Einheiten in diesen Siliconharzen liegt vorzugsweise unter 10 Gew.-%.

Vorzugsweise besitzen die Siliconharze (E) eine zahlenmittlere Molmasse Mₙ von bevorzugt 400 bis 400 000 g/mol, besonders bevorzugt von 600 bis 100 000 g/mol, insbesondere von 800 bis 5 000 g/mol. Sie können bei 23 °C und 1000 hPa sowohl fest als auch flüssig sein, wobei flüssige Siliconharze bevorzugt werden.

Bei den gegebenenfalls eingesetzten Siliconharzen (E) handelt es sich um handelsübliche Produkte, z.B. um verschiedene SILRES^{®}-Typen der Fa. Wacker Chemie AG, wie SILRES^{®} IC 368, SILRES^{®} IC 678 oder SILRES^{®} SY231 bzw. können nach in der Chemie gängigen Methoden hergestellt werden.

Falls die erfindungsgemäßen Massen (K) Siliconharze (E) enthalten, handelt es sich um Mengen von vorzugsweise 5 bis 300 Gewichtsteilen, insbesondere von 10 bis 200 Gewichtsteilen, jeweils bezogen auf 100 Gewichtsteile Komponente (A).

In einer bevorzugten Aufführung der Erfindung enthalten die erfindungsgemäßen Massen (K) Siliconharze (E).

Zusätzlich zu den Komponenten (A) bis (E) können die erfindungsgemäßen Massen (K) weitere Stoffe enthalten, die unterschiedlich sind zu Komponenten (A) bis (E), wie z.B. Füllstoffe (F), Katalysatoren (G), Additive (H) und Zuschlagstoffe (I).

Bei den in den erfindungsgemäßen Massen (K) gegebenenfalls eingesetzten Füllstoffen (F) kann es sich um beliebige, bisher bekannte Füllstoffe handeln.

Beispiele für Füllstoffe (F) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminiumtrihydroxid, hohlkugelförmiger Füllstoffe, wie keramische Mikrokugel, wie z.B. solche erhältlich unter der Handelsbezeichnung Zeeospheres™ bei der Fa. 3M Deutschland GmbH in D-Neuss, elastische Kunststoffkugeln, wie etwa solche erhältlich unter der Handelsbezeichnung EXPANCEL^{®} bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei den gegebenenfalls eingesetzten Füllstoffen (F) um Calciumcarbonat, Talkum, Aluminiumtrihydroxid sowie Kieselsäure, wobei Aluminiumtrihydroxid besonders bevorzugt wird. Bevorzugte Calciumcarbonat-Typen sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Gegebenenfalls eingesetzte Füllstoffe (F) haben einen Feuchtigkeitsgehalt von bevorzugt unter 1 Gew.-%, besonders bevorzugt von unter 0,5 Gew.-%.

Falls die erfindungsgemäßen Massen (K) Füllstoffe (F) enthalten, handelt es sich um Mengen von vorzugsweise 10 bis 1000 Gewichtsteilen, besonders bevorzugt 50 bis 500 Gewichtsteilen, insbesondere 80 bis 300 Gewichtsteilen, jeweils bezogen auf 100 Gewichtsteile Bestandteil (A). Die erfindungsgemäßen Massen (K) enthalten bevorzugt Füllstoffe (F).

In einer besonderen Ausführung der Erfindung enthalten die erfindungsgemäßen Massen (K) als Füllstoffe (F) eine Kombination aus
a) Kieselsäure, insbesondere pyrogene Kieselsäure, und
b) Calciumcarbonat, Aluminiumtrihydroxid und/oder Talkum.

Falls die erfindungsgemäßen Massen (K) diese besondere Kombination verschiedener Füllstoffe (F) enthalten, enthalten sie vorzugsweise 1 bis 80 Gewichtsteile, besonders bevorzugt 5 bis 40 Gewichtsteile, Kieselsäure, insbesondere pyrogene Kieselsäure, und vorzugsweise 10 bis 500 Gewichtsteile, besonders bevorzugt 50 bis 300 Gewichtsteile, Calciumcarbonat, Aluminiumtrihydroxid, Talkum oder Mischungen aus diesen Materialien, jeweils bezogen auf 100 Gewichtsteile Bestandteil (A).

Bei den in den erfindungsgemäßen Massen (K) gegebenenfalls eingesetzten Katalysatoren (G) kann es sich um beliebige, bisher bekannte Katalysatoren für durch Silankondensation härtende Massen handeln, die unterschiedlich sind zu Komponente (B).

Beispiele für metallhaltige Härtungskatalysatoren (G) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (G) sind basische Verbindungen, wie Triethylamin, Tributylamin, 1,4-Diazabicyclo[2,2,2]octan, 1,5-Diazabicyclo[4.3.0]non-5-en, 1,8-Diazabicyclo[5.4.0]undec-7-en, N,N-Bis-(N,N-dimethyl-2-aminoethyl)-methylamin, Guanidin, N-alkylierte Guanidine wie Dimethylguanidin, Trimethylguanidin, Tetramethylguanidin oder Pentamethylguanidin, N,N-Dimethylcyclohexylamin, N,N-Dimethylphenylamin und N-Ethylmorpholinin.

Ebenfalls als Katalysator (G) können saure Verbindungen eingesetzt werden, wie Phosphorsäure und ihre Ester, Toluolsulfonsäure, Schwefelsäure, Salpetersäure oder auch organische Carbonsäuren, z.B. Essigsäure und Benzoesäure.

Falls die erfindungsgemäßen Massen (K) Katalysatoren (G) enthalten, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile Bestandteil (A).

In einer Ausführung der Erfindung handelt es sich bei den gegebenenfalls eingesetzten Katalysatoren (G) um metallhaltige Härtungskatalysatoren, bevorzugt um zinnhaltige Katalysatoren. Diese Ausführungsform der Erfindung ist insbesondere dann bevorzugt, wenn die Komponente (A) ganz oder zumindest teilweise, d.h. zu mindestens 90 Gew.-%, vorzugsweise zu mindestens 95 Gew.-%, aus Verbindungen der Formel (I) besteht, in denen b ungleich 1 ist.

Bei den erfindungsgemäßen Massen (K) kann vorzugsweise dann auf Zinn enthaltende Katalysatoren (G), besonders bevorzugt metallhaltige Katalysatoren (G), insbesondere auf sämtliche Katalysatoren (G), verzichtet werden, wenn die Komponente (A) ganz oder zumindest teilweise, d.h. zu mindestens 10 Gew.-%, vorzugsweise zu mindestens 20 Gew.-%, aus Verbindungen der Formel (I) besteht, in denen b gleich 1 ist und R¹ die Bedeutung von Wasserstoffatom hat. Diese Ausführungsform der Erfindung ohne metall- und insbesondere ohne zinnhaltige Katalysatoren wird besonders bevorzugt.

Bei den in den erfindungsgemäßen Massen (K) gegebenenfalls eingesetzten Additiven (H) kann es sich um beliebige, bisher bekannte für silanvernetzende Systeme typische Additive handeln.

Bei den erfindungsgemäß gegebenenfalls eingesetzten Additiven (H) handelt es sich bevorzugt um Antioxidantien, UV-Stabilisatoren, wie z.B. sog. HALS-Verbindungen, Fungizide und Pigmente.

Falls die erfindungsgemäßen Massen (K) Additive (H) enthalten, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile Bestandteil (A). Die erfindungsgemäßen Massen (K) enthalten bevorzugt Additive (H).

Bei den erfindungsgemäß gegebenenfalls eingesetzten Zuschlagsstoffen (I) handelt es sich bevorzugt um Weichmacher, Rheologieadditive, Flammschutzmittel und organische Lösungsmittel.

Beispiele für Weichmacher (I) sind wie Phthalsäureester (z.B. Dioctylphthalat, Diisooctylphthalat und Diundecylphthalat), perhydrierte Phthalsäureester (z.B. 1,2-Cyclohexandicarbonsäurediisononylester und 1,2-Cyclohexandicarbonsäuredioctylester) Adipinsäureester (z.B. Dioctyladipat), Benzoesäureester, Glycolester, Ester gesättigter Alkandiole (z.B. 2,2,4-Trimethyl-1,3-pentandiolmonoisobutyrate und 2,2,4-Trimethyl-1,3-pentandioldiisobutyrate), Phosphorsäureester, Sulfonsäureester, Polyester, Polyether (z.B. Polyethylenglycole und Polypropylenglycole mit Molmassen von vorzugsweise 1000 bis 10 000 Dalton), Polystyrole, Polybutadiene, Polyisobutylene, paraffinische Kohlenwasserstoffe und hochmolekulare, verzweigte Kohlenwasserstoffe.

Bei den Rheologieadditiven (I) handelt es sich bevorzugt um Polyamidwachse, hydrierte Rizinusöle oder Harnstoffderivate auf Basis von MDI.

Beispiele für organische Lösungsmittel (I) sind wie Ether (z.B. Diethylether, Methyl-t-butylether, Etherderivate des Glycols, THF), Ester (z.B. Ethylacetat, Butylacetat, Glycolester), Kohlenwasserstoffe (z.B. Pentan, Cyclopentan, Hexan, Cyclohexan, Heptan, Octan oder auch längerkettige verzweigte und unverzweigte Alkane), Ketone (z.B. Aceton, Methylethylketon), Aromaten (z.B. Toluol, Xylol, Ethylbenzol, Chlorbenzol) oder auch Alkohole (z.B. Methanol, Ethanol, Glycol, Propanol, iso-Propanol, Glycerin, Butanol, iso-Butanol, t-Butanol) wobei Alkohole bevorzugt werden.

Den erfindungsgemäßen Massen (K) werden vorzugsweise keine organischen Lösungsmitteln (I) zugesetzt.

Falls die erfindungsgemäßen Massen (K) eine oder mehrere Komponenten (I) enthalten, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile Komponente (A).

Bei den erfindungsgemäßen Massen (K) handelt es sich vorzugsweise um solche enthaltend
(A) 100 Gewichtsteile silanterminierte Polyoxyalkylene mit Endgruppen der Formel (VI) und einer mittleren Molmasse Mₙ von 10 000 bis 30 000 g/mol,
(B) 0,2 bis 20 Gewichtsteile Silane der Formel (II) und/oder deren Teilhydrolysate,
(C) 0,2 bis 20 Gewichtsteile Silane der Formel (III) und/oder deren Teilhydrolysate,
   mit der Maßgabe, dass mindestens 15 %, bevorzugt mindestens 25 %, besonders bevorzugt mindestens 35 %, insbesondere mindestens 45 %, aller Si-Atome in den Komponenten (B) und (C) zu Einheiten der Formeln (II) oder (III) gehören mit e oder h gleich 1,
   sowie mindestens eine weitere Komponente ausgewählt aus
(D) 0,2 bis 20 Gewichtsteile Alkoxysilane und
(E) 1 bis 500 Gewichtsteilen Siliconharze,
   sowie zusätzlich
   gegebenenfalls
(F) Füllstoffe,
   gegebenenfalls
(G) Katalysatoren,
   gegebenenfalls
(H) Additive und
   gegebenenfalls
(I) Zuschlagstoffe.

Bei den erfindungsgemäßen Massen (K) handelt es sich bevorzugt um solche enthaltend
(A) 100 Gewichtsteile lineare silanterminierte Polyoxypropylene, deren Kettenenden zu mindestens 85 % mit Endgruppen der Formel (VI) terminiert sind, und die eine mittlere Molmasse Mₙ von 10 000 bis 30 000 g/mol aufweisen,
(B) 0,2 bis 20 Gewichtsteile Silane der Formel (II) und/oder deren Teilhydrolysate,
(C) 0,2 bis 20 Gewichtsteile Silane der Formel (III) und/oder deren Teilhydrolysate,
   mit der Maßgabe, dass mindestens 15 %, bevorzugt mindestens 25 %, besonders bevorzugt mindestens 35 %, insbesondere mindestens 45 %, aller Si-Atome in den Komponenten (B) und (C) zu Einheiten der Formeln (II) oder (III) gehören mit e oder h gleich 1,
   sowie mindestens eine weitere Komponente ausgewählt aus
(D) 0,2 bis 20 Gewichtsteile Alkoxysilane und
(E) 1 bis 500 Gewichtsteilen Siliconharze,
   sowie zusätzlich
   gegebenenfalls
(F) Füllstoffe,
   gegebenenfalls
(G) Katalysatoren,
   gegebenenfalls
(H) Additive und
   gegebenenfalls
(I) Zuschlagstoffe.

Bei den erfindungsgemäßen Massen (K) handelt es sich besonders bevorzugt um solche enthaltend
(A) 100 Gewichtsteile lineare silanterminierte Polyoxypropylene, deren Kettenenden zu mindestens 85 % mit Endgruppen der Formel (VI) terminiert sind, und die eine mittlere Molmasse Mₙ von 11 000 bis 22 000 g/mol aufweisen,
(B) 0,5 bis 15 Gewichtsteile Silane der Formel (II) und/oder deren Teilhydrolysate,
(C) 0,5 bis 10 Gewichtsteile Silane der Formel (III) und/oder deren Teilhydrolysate,
   mit der Maßgabe, dass mindestens 15 %, bevorzugt mindestens 25 %, besonders bevorzugt mindestens 35 %, insbesondere mindestens 45 %, aller Si-Atome in den Komponenten (B) und (C) zu Einheiten der Formeln (II) oder (III) gehören mit e oder h gleich 1,
   sowie mindestens eine weitere Komponente ausgewählt aus
(D) 0,5 bis 10 Gewichtsteile Alkoxysilane und
(E) 5 bis 200 Gewichtsteilen Siliconharze,
   sowie zusätzlich
   gegebenenfalls
(F) Füllstoffe,
   gegebenenfalls
(G) Katalysatoren,
   gegebenenfalls
(H) Antioxidantien, UV-Stabilisatoren, Fungizide, Biozide oder Pigmente und
   gegebenenfalls
(I) Weichmacher, Rheologieadditive, Flammschutzmittel oder organische Lösungsmittel.

Bei den erfindungsgemäßen Massen (K) handelt es sich insbesondere um solche enthaltend
(A) 100 Gewichtsteile lineare silanterminierte Polyoxypropylene, deren Kettenenden zu mindestens 85 % mit Endgruppen der Formel (VI) terminiert sind, und die eine mittlere Molmasse Mₙ von 11 000 bis 22 000 g/mol aufweisen,
(B) 0,5 bis 15 Gewichtsteile Silane der Formel (II) mit e=1 und/oder deren Teilhydrolysate,
(C) 0,5 bis 10 Gewichtsteile Silane der Formel (III) mit h=0 und/oder deren Teilhydrolysate,
   sowie mindestens eine weitere Komponente ausgewählt aus
(D) 0,5 bis 10 Gewichtsteile Alkoxysilane, ausgewählt aus der Gruppe bestehend aus Tetraethoxysilan, Vinyltrimethoxysilan, Vinyltriethoxysilan, Vinylmethyldimethoxysilan oder Vinylmethyldiethoxysilan, und
(E) 5 bis 200 Gewichtsteilen Phenylgruppen enthaltende Siliconharze,
   sowie zusätzlich
   gegebenenfalls
(F) Füllstoffe,
   gegebenenfalls
(G) Katalysatoren,
   gegebenenfalls
(H) Antioxidantien, W-Stabilisatoren, Fungizide, Biozide oder Pigmente und
   gegebenenfalls
(I) Weichmacher, Rheologieadditive, Flammschutzmittel oder organische Lösungsmittel.

Die erfindungsgemäßen Massen (K) enthalten außer den Komponenten (A) bis (I) vorzugsweise keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bei den erfindungsgemäßen Massen (K) handelt es sich bevorzugt um Formulierungen mit Viskositäten von bevorzugt 500 bis 1 000 000 mPas, besonders bevorzugt von 1 000 bis 500 000 mPas, insbesondere 1 000 bis 20 000 mPas, jeweils bei 25 °C.

In einer bevorzugten Ausführung der Erfindung zeichnen sich die erfindungsgemäßen Massen dadurch aus, dass sie nach ihrer vollständigen Aushärtung eine Reißfestigkeit von mindestens 1 MPa aufweisen, jeweils gemessen nach DIN EN 53504.

In einer weiteren bevorzugten Ausführung der Erfindung zeichnen sich die erfindungsgemäßen Massen dadurch aus, dass sie nach ihrer vollständigen Aushärtung eine Zugscherfestigkeit von mindestens 5 MPa, besonders bevorzugt von mindestens 8 MPa, insbesondere mindestens 10 MPa, aufweisen, jeweils gemessen nach DIN EN 204.

Ein weiterer Gegenstand der vorliegenden Erfindung ist ein Verfahren zur Herstellung der erfindungsgemäßen vernetzbaren Massen durch Mischen der einzelnen Komponenten in beliebiger Reihenfolge.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130 °C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit.

Das erfindungsgemäße verfahren kann kontinuierlich oder diskontinuierlich durchgeführt werden.

Bei den erfindungsgemäßen Massen (K) handelt es sich bevorzugt um einkomponentige, unter Ausschluss von Wasser lagerfähige, bei Zutritt von Wasser bei Raumtemperatur vernetzbare Massen. Die erfindungsgemäßen Massen (K) können aber auch Teil von zweikomponentigen Vernetzungssystemen sein, bei denen in einer zweiten Komponente OH-haltige Verbindungen, wie Wasser, hinzugefügt werden.

Für die Vernetzung der erfindungsgemäßen Massen (K) reicht der übliche Wassergehalt der Luft aus. Die Vernetzung der erfindungsgemäßen Massen (K) erfolgt vorzugsweise bei Raumtemperatur. Sie kann, falls erwünscht, auch bei höheren oder niedrigeren Temperaturen als Raumtemperatur, z.B. bei -5° bis 15 °C oder bei 30° bis 50 °C und/oder mittels des normalen Wassergehalts der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der Erfindung sind Formkörper hergestellt durch Vernetzung der erfindungsgemäßen Massen.

Bei den erfindungsgemäßen Formkörpern kann es sich um beliebige Formkörper handeln, wie etwa Dichtungen, Pressartikel, extrudierte Profile, Beschichtungen, Imprägnierungen, Verguss, Linsen, Prismen, polygone Strukturen, Laminat- oder Klebschichten.

Ein weiterer Gegenstand der Erfindung ist ein Verfahren zur Verklebung oder Abdichtung von Substraten, bei denen die erfindungsgemäße Masse auf die Oberfläche mindestens eines Substrates aufgebracht, diese Oberfläche dann mit dem zu verklebenden zweiten Substrat in Kontakt gebracht und anschließend vernetzen gelassen wird.

Beispiele für Substrate, die erfindungsgemäß verklebt oder abgedichtet werden können, sind insbesondere Holz aber auch Kunststoffe inkl. PVC, Beton, mineralische Untergründe, Metalle, Glas, Keramik und lackierte Oberflächen. Dabei können sowohl gleiche als auch unterschiedliche Materialien miteinander verklebt werden.

Ein weiterer Gegenstand der Erfindung ist ein Verfahren zur Herstellung von Beschichtungen oder Vergüssen, bei denen die erfindungsgemäße Masse auf mindestens ein Substrat aufgebracht und anschließend vernetzen gelassen wird.

Beispiele hierfür sind Vergussmassen für LEDs oder sonstige elektronische Bauteile, die Herstellung von Formartikeln, Verbundmaterialien und Verbundformteilen. Unter Verbundformteilen soll hier ein einheitlicher Formartikel aus einem Verbundmaterial verstanden werden, der aus einem Vernetzungsprodukt der erfindungsgemäßen Massen (K) und mindestens einem Substrat so zusammengesetzt ist, dass zwischen den beiden Teilen eine feste, dauerhafte Verbindung besteht.

Die erfindungsgemäßen Massen (K) haben den Vorteil, dass sie auch unter den Bedingungen einer Wasserlagerung ein gutes Haftungsprofil aufweisen.

Die erfindungsgemäßen Massen (K) haben den Vorteil, dass sie leicht herzustellen sind.

Die erfindungsgemäßen vernetzbaren Massen (K) haben den Vorteil, dass sie sich durch eine sehr hohe Lagerstabilität und eine hohe Vernetzungsgeschwindigkeit auszeichnen.

Des Weiteren haben die erfindungsgemäßen vernetzbaren Massen (K) den Vorteil, dass sie leicht zu verarbeiten sind.

Des Weiteren haben die erfindungsgemäßen vernetzbaren Massen (K) den Vorteil, dass daraus Klebstoffe mit hoher Reißfestigkeit erhalten werden können.

Ferner haben die erfindungsgemäßen feuchtigkeitshärtenden Kleb- und Dichtstoffe den Vorteil, dass sie ein deutlich verbessertes Haftungsprofil nach Kaltwasserlagerung aufweisen.

In den nachstehend beschriebenen Beispielen beziehen sich alle Viskositätsangaben auf eine Temperatur von 25 °C. Sofern nicht anders angegeben, werden die nachstehenden Beispiele bei einem Druck der umgebenden Atmosphäre, also etwa bei 1000 hPa, und bei Raumtemperatur, also bei etwa 23 °C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiel 1

### Herstellung einer Klebstoffformulierung

98,8 g silanterminiertes Polypropylenglycol mit einer mittleren Molmasse Mₙ von 12000 g/mol und Endgruppen der Formel -O-C(=O)-NH-CH₂-SiCH₃(OCH₃)₂ (käuflich erhältlich unter der Bezeichnung GENIOSIL^{®} STP-E10 bei der Wacker Chemie AG, D-München) werden in einem Laborplanetenmischer der Fa. PC-Laborsystem, ausgestattet mit zwei Balkenmischern, bei ca. 25 °C mit 98 g eines Polypropylenglycol mit einer mittleren Molmasse Mn von 2000 g/mol, 2,0 g HALS-Stabilisator (käuflich erhältlich unter der Bezeichnung TINUVIN^{®} 123 bei der BASF AG, D-Ludwigshafen; CAS-NR: 129757-67-1) und 6 g Vinyltrimethoxysilan 2 Minuten bei 200 U/min homogenisiert. Danach werden 171,2 g eines mit Stearinsäure beschichteten Marmormehls mit einem mittleren Teilchendurchmesser (D50%) von ca. 2,0 µm (käuflich erhältlich unter der Bezeichung Omyabond 520 bei der Firma Omya, D-Köln) und 16 g einer hydrophoben pyrogenen Kieselsäure mit einer BET-Oberfläche von ca. 200 m²/g (käuflich erhältlich unter der Bezeichnung HDK^{®} H18 bei der Wacker Chemie AG, D-München) eine Minute unter Rühren bei 600 U/min aufgeschlossen. Schließlich werden 4 g *N*-(2-Aminoethyl)-3-aminopropyl-methyldimethoxysilan und 4 g 3-Glycidoxypropyl-trimethoxysilan 1 Minute bei 200 U/min vermischt und 1 Minute bei 200 U/min im Teilvakuum (ca. 100 mbar) homogenisiert und blasenfrei gerührt.

Die so erhaltene Masse wird in 310 ml PE-Kartuschen abgefüllt und 24 Stunden bei 20 °C vor der Untersuchung gelagert.

### Beispiel 2

### Herstellung einer Klebstoffformulierung

Es wird ebenso vorgegangen wie in Beispiel 1 beschrieben. Allerdings werden statt 4 g 3-Glycidoxypropyl-trimethoxysilan und 4 g *N*-(2-Aminoethyl)-3-aminopropyl-methyldimethoxysilan jeweils 4 g von 3-Glycidoxypropyl-methyldiethoxysilan und N-(2-Aminoethyl)-3-aminopropyl-trimethoxysilan eingesetzt.

Die so erhaltene Masse wird in 310 ml PE-Kartuschen abgefüllt und 24 Stunden bei 20 °C vor der Untersuchung gelagert.

### Beispiel 3

### Herstellung einer Klebstoffformulierung

Es wird ebenso vorgegangen wie in Beispiel 1 beschrieben. Allerdings werden statt 4 g 3-Glycidoxypropyl-trimethoxysilan 4 g 3-Glycidoxypropyl-methyldiethoxysilan eingesetzt.

Die so erhaltene Masse wird in 310 ml PE-Kartuschen abgefüllt und 24 Stunden bei 20 °C vor der Untersuchung gelagert.

### Vergleichsbeispiel 1 (V1)

### Herstellung einer Klebstoffformulierung

Es wird ebenso vorgegangen wie in Beispiel 1 beschrieben. Allerdings werden statt 4 g N-(2-Aminoethyl)-3-aminopropyl-methyldimethoxysilan 4 g N-(2-Aminoethyl)-3-aminopropyl-trimethoxysilan eingesetzt.

Die so erhaltene Masse wird in 310 ml PE-Kartuschen abgefüllt und 24 Stunden bei 20 °C vor der Untersuchung gelagert.

### Vergleichsbeispiel 2 (V2)

### Herstellung einer Klebstoffformulierung

Es wird ebenso vorgegangen wie in Beispiel 1 beschrieben. Allerdings werden statt 4 g 3-Glycidoxypropyl-trimethoxysilan und 4 g *N*-(2-Aminoethyl)-3-aminopropyl-methyldimethoxysilan 8 g N-(2-Aminoethyl)-3-aminopropyl-methyldimethoxysilan eingesetzt.

Die so erhaltene Masse wird in 310 ml PE-Kartuschen abgefüllt und 24 Stunden bei 20 °C vor der Untersuchung gelagert.

### Vergleichsbeispiel 3 (V3)

### Herstellung einer Klebstoffformulierung

Es wird ebenso vorgegangen wie in Beispiel 1 beschrieben. Allerdings werden statt 4 g 3-Glycidoxypropyl-trimethoxysilan und 4 g N-(2-Aminoethyl)-3-aminopropyl-methyldimethoxysilan 8 g N-(2-Aminoethyl)-3-aminopropyl-trimethoxysilan eingesetzt.

Die so erhaltene Masse wird in 310 ml PE-Kartuschen abgefüllt und 24 Stunden bei 20 °C vor der Untersuchung gelagert.

### Beispiel 4

Die in den Beispielen 1 bis 3 sowie in den Vergleichsbeispielen V1 bis V3 erhaltenen Massen wurden vernetzen gelassen und hinsichtlich ihrer Hautbildung, ihrer mechanischen Eigenschaften und ihres Haftprofils nach Wasserlagerung untersucht. Die Ergebnisse finden sich in Tabelle 1.

### Hautbildungszeit (HBZ)

Zur Bestimmung der Hautbildungszeit werden die in den Beispielen erhaltenen vernetzbaren Massen in einer 2 mm dicken Schicht auf PE-Folie aufgetragen und bei Normklima (23 °C und 50 % relative Luftfeuchtigkeit) gelagert. Während des Aushärtens wird alle 5 min die Bildung einer Haut getestet. Dazu wird ein trockener Laborspatel vorsichtig auf die Oberfläche der Probe aufgesetzt und nach oben gezogen. Bleibt Probe am Spatel kleben, hat sich noch keine Haut gebildet. Bleibt keine Probe am Spatel mehr kleben, so hat sich eine Haut gebildet und die Zeit wird notiert.

### Mechanische Eigenschaften

Die Massen wurden jeweils auf ausgefräste Teflonplatten mit 2 mm Tiefe ausgestrichen und 2 Wochen bei 23 °C und 50 % relativer Luftfeuchte gehärtet.

Shore-A-Härte wird gemäß DIN 53505 bestimmt.

Reißfestigkeit wird gemäß DIN 53504-S1 bestimmt.

Reißdehnung wird gemäß DIN 53504-S1 bestimmt.

### Haftungsprofil

Mit den Massen wurden jeweils Haftversuche auf den in Tabelle 1 angegebenen Substraten unter den folgenden Bedingungen durchgeführt:
Eine 5-7 cm dicke Raupe wird auf dem Substrat aufgetragen und 14 Tage im Klimaschrank bei Raumtemperatur und einer relativen Luftfeuchtigkeit von 50 % gelagert. Anschließend wird die Probe für weitere 14 Tage bei Raumtemperatur unter Wasser gelagert.

Nach der Lagerung wird ein Peel-Test durchgeführt, bei dem die Raupe an einem Ende mit einem scharfen Messer auf einer Länge von ca. 2 cm vom Substrat abgeschnitten wird. Anschließend wird, ausgehend von diesem Schnitt, der Rest der Raupe von dem Substrat abgerissen und die Art des entstehenden Risses (kohäsiv und/oder adhäsiv) beurteilt.

**Tabelle 1**

| **Masse aus Beispiel** | 1 | 2 | 3 | V1 | V2 | V3 |
|---|---|---|---|---|---|---|
| HBZ [min] | 43 | 35 | 44 | 35 | 32 | 31 |
| Shore-A-Härte | 41 | 39 | 41 | 41 | 32 | 37 |
| Reißfestigkeit [N/mm²] | 1,4 | 1,4 | 1,4 | 1,3 | 1,7 | 1,6 |
| Reißdehnung [%] | 201 | 244 | 222 | 182 | 591 | 341 |
| **Haftung :** | | | | | | |
| AlMGSi1 | + | + | + | + | - | + |
| AlMg eloxiert | + | + | + | - | - | Ø |
| Edelstahl | + | + | + | + | - | - |
| Stahl DC05 KTL beschichtet | + | + | + | + | - | - |
| Glas | + | + | + | - | - | - |
| Holz | + | + | + | + | + | + |
| PVC | Ø | | + | - | + | - |
| Polycarbonat | Ø | + | + | Ø | - | - |
| Keramikfliese | + | + | + | - | - | - |

| | | | | | | |
|---|---|---|---|---|---|---|
| (+) gute Haftung / kohäsiver Riss beim Peel-Test (Ø) Teilhaftung / kohäsiver und adhesiver Riss Peel-Test (-) keine Haftung / adhesiver Riss beim Peel-Test | | | | | | |

### Beispiel 5

### Herstellung einer Klebstoffformulierung

133 g silanterminiertes Polypropylenglycol mit einer mittleren Molmasse Mₙ von 12000 g/mol und Endgruppen der Formel -O-C(=O)-NH-CH₂-SiCH₃(OCH₃)₂ (käuflich erhältlich unter der Bezeichnung GENIOSIL^{®} STP-E10 bei der Wacker Chemie AG, D-München) werden in einem Laborplanetenmischer der Fa. PC-Laborsystem, ausgestattet mit zwei Balkenmischern, bei ca. 25 °C mit 247 g eines lösungsmittelfreien, flüssigen Phenylsiliconharzes, das aus phenylfunktionellen T-Einheiten (60-80 Gew.-%) und methylfunktionellen T-Einheiten (18-30 Gew.-%) und dimethylfunktionellen D-Einheiten (2-5 Gew.-%) zusammengesetzt ist, einen Gehalt an Methoxygruppen von 12-16 Gew.-% und eine mittlere Molmasse Mₙ von 800-1300 g/mol aufweist (käuflich erhältlich unter der Bezeichnung SILRES^{®} IC 368 bei der Wacker Chemie AG, D-München), und 10,0 g 3-Glycidoxypropyl-trimethoxysilan für 2 Minuten bei 200 U/min homogenisiert. Danach werden 10,0 g *N-(2-*Aminoethyl)-3-aminopropyl-methyldimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Die Formulierung wird in 310 ml PE-Kartuschen abgefüllt und einen Tag bei 20 °C vor der Untersuchung gelagert.

### Beispiel 6

### Herstellung einer Klebstoffformulierung

Es wird ebenso vorgegangen wie in Beispiel 5 beschrieben. Allerdings werden nur 129 g silanterminiertes Polymer (GENIOSIL^{®} STP-E10) und 241 g Phenylsiliconharz (SILRES^{®} IC 368) eingesetzt. Dafür werden zusätzlich auch noch 10 g eines hydroxylgruppen-terminierten, flüssigen Poly-[N-(2-Aminoethyl)-3-aminopropyl]-methylsiloxans mit einer Viskosität von 2000-6000 mPas bei 25 °C (käuflich erhältlich unter der Bezeichnung GENIOSIL^{®} GF95-Hydrolysat bei der Wacker Chemie AG, D-München) eingearbeitet.

Die so erhaltene Masse wird in 310 ml PE-Kartuschen abgefüllt und 24 Stunden bei 20 °C vor der Untersuchung gelagert.

### Vergleichsbeispiel V4

### Herstellung einer Klebstoffformulierung

Es wird ebenso vorgegangen wie in Beispiel 5 beschrieben. Allerdings werden statt 10 g *N*-(2-Aminoethyl)-3-aminopropyl-methyldimethoxysilan 10 g N-(2-Aminoethyl)-3-aminopropyl-trimethoxysilan eingesetzt.

Die so erhaltene Masse wird in 310 ml PE-Kartuschen abgefüllt und 24 Stunden bei 20 °C vor der Untersuchung gelagert.

### Vergleichsbeispiel V5

### Herstellung einer Klebstoffformulierung

Es wird ebenso vorgegangen wie in Beispiel 5 beschrieben. Allerdings werden statt 10 g 3-Glycidoxypropyl-trimethoxysilan und 10 g N-(2-Aminoethyl)-3-aminopropyl-methyldimethoxysilan 20 g *N*-(2-Aminoethyl)-3-aminopropyl-trimethoxysilan eingesetzt.

Die so erhaltene Masse wird in 310 ml PE-Kartuschen abgefüllt und 24 Stunden bei 20 °C vor der Untersuchung gelagert.

### Beispiel 7

Die in den Beispielen 5 und 6 sowie in den Vergleichsbeispielen V4 und V5 erhaltenen Massen wurden vernetzen gelassen und hinsichtlich ihrer Hautbildung, und ihrer Zugscherfestigkeit mit und ohne Wasserlagerung untersucht. Die Hautbildungszeit wurde wie in Beispiel 4 beschrieben bestimmt. Die Ergebnisse finden sich in Tabelle 2.

### Zugscherfestikeit

Die Bestimmung der Zugscherfestigkeiten erfolgt wie in der DIN EN 204 beschrieben. Hierbei erfolgt ein Auftrag des Klebstoffes auf beide zu verklebenden Buchenhölzer, welche dann mit einem 100 µm Rakel abgezogen werden. Anschließend erfolgt das Verbinden der beiden Hölzer über eine Fläche von 1 mal 2 cm mit einem Anpressdruck von 5 kg. Nach dem Anpressen von 24 Stunden werden die Hölzer im Normklima für den angegebenen Zeitraum gelagert. Bei der Bestimmung des D4-1-Wertes wird die Zugscherfestigkeit der beiden verklebten Hölzer direkt nach einer 7-tägigen Lagerung bei Normklima gemessen.

Bei der Bestimmung des D4-3-Wertes wird die Zugscherfestigkeit der beiden verklebten Hölzer nach einer 7-tägigen Lagerung bei Normklima, einer anschließenden 4-tägigen Lagerung in 23 °C warmen Wasser und anschließender 2-stündiger Äquilibrierung unter Normklima gemessen.

Bei der Bestimmung des D4-5-Wertes wird die Zugscherfestigkeit der beiden verklebten Hölzer nach einer 7-tägigen Lagerung bei Normklima, einer anschließenden 6-stündigen Lagerung in kochendem Wasser und anschließender 2-stündiger Äquilibrierung unter Normklima gemessen.

Es werden die in Tabelle 2 angegebenen Werte erzielt:

**Tabelle 2**

| **Masse aus Beispiel** | **5** | **6** | **V4** | **V5** |
|---|---|---|---|---|
| HBZ [min] | 69 | 64 | 58 | 66 |
| **Lagerbedingungen** | **Zugscherfestigkeit [MPa]** | | | |
| D4-1 (Normklima) | 10, 4 | 13,5 | 11,2 | 10,2 |
| D4-3 (Kaltwassertest) | 3,3 | 4,1 | 1,9 | 2,5 |
| D4-5 (Kochwassertest) | 3,4 | 4,5 | 3,1 | 3,0 |

## Patentansprüche

1. Vernetzbare Massen (K) enthaltend
(A) 100 Gewichtsteile Verbindungen der Formel
Y-[(CR¹₂)_{b}-SiRₐ(OR²)₃₋ₐ]ₓ (I),
wobei
Y einen x-wertigen, über Stickstoff, Sauerstoff, Schwefel oder Kohlenstoff gebundenen Polymerrest bedeutet,
R gleich oder verschieden sein kann und einen einwertigen, gegebenenfalls substituierten, SiC-gebundenen Kohlenwasserstoffrest darstellt,
R¹ gleich oder verschieden sein kann und Wasserstoffatom oder einen einwertigen, gegebenenfalls substituierten Kohlenwasserstoffrect darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
x eine ganze Zahl von 1 bis 10 ist,
a gleich oder verschieden sein kann und 0, 1 oder 2 ist und
b gleich oder verschieden sein kann und eine ganze Zahl von 1 bis 10 ist,
(B) 0,1 bis 30 Gewichtsteile Organosiliciumverbindungen enthaltend Einheiten der Formel
DSi(OR³)ₐR⁴ₑO_{(3-d-e)/2} (II),
worin
D einen einwertigen, SiC-gebundenen Rest mit basischem Stickstoff bedeutet,
R³ gleich oder verschieden sein kann und Wasserstoffatom oder gegebenenfalls substituierte Kohlenwasserstoffreste bedeutet,
R⁴ gleich oder verschieden sein kann und einen unsubstituierten oder halogensubstituierten, SiC-gebundenen Alkylrest mit 1 bis 8 Kohlenstoffatomen bedeutet,
d 0, 1, 2 oder 3 ist und
e 0, 1, 2 oder 3 ist,
wobei die Summe aus d+e kleiner oder gleich 3 ist und pro Molekül mindestens ein Rest (OR³) anwesend ist,
(C) 0,1 bis 30 Gewichtsteile Organosiliciumverbindungen enthaltend Einheiten der Formel
ESi(OR⁵)_{g}R⁶ₕO_{(3-g-h)/2} (III),
worin
E gleich oder verschieden sein kann und einen einwertigen, SiC-gebundenen Rest mit einer Epoxyfunktion bedeutet,
R⁵ gleich oder verschieden sein kann und Wasserstoffatom oder gegebenenfalls substituierte Kohlenwasserstoffreste bedeutet,
R⁶ gleich oder verschieden sein kann und einen unsubstituierten oder halogensubstituierten, SiC-gebundenen Alkylrest mit 1 bis 8 Kohlenstoffatomen bedeutet,
g 0, 1, 2 oder 3 ist und
h 0, 1, 2 oder 3 ist,
wobei die Summe aus g+h kleiner oder gleich 3 ist und pro Molekül mindestens ein Rest (OR^{b}) anwesend ist,
mit der Maßgabe, dass mindestens 15 % aller Si-Atome in den Komponenten (B) und (C) zu Einheiten der Formeln (II) oder (III) gehören mit e oder h gleich 1, wobei es unerheblich ist, ob Komponenten (B) enthaltend Einheiten der Formel (II) mit e=1 oder Komponenten (C) enthaltend Einheiten der Formel (III) mit h=1 oder aber beide eingesetzt werden, solange die oben genannte Maßgabe erfüllt ist,
und mindestens eine weitere Komponente, ausgewählt aus den Komponenten
(D) 0,1 bis 30 Gewichtsteile Alkoxysilane, die von Komponenten (B) und (C) verschieden sind, und
(E) 1 bis 500 Gewichtsteile Siliconharze, die von Komponenten (B) und (C) verschieden sind, enthaltend Einheiten der Formel
R⁷₁(R⁸O)ⱼSiO_{(4-1-j)/2} (IV),
wobei
R⁷ gleich oder verschieden sein kann und Wasserstoffatom oder einen einwertigen, SiC-gebundenen, gegebenenfalls substituierten Kohlenwasserstoffrest bedeutet,
R⁸ gleich oder verschieden sein kann und Wasserstoffatom oder einen einwertigen, gegebenenfalls substituierten Kohlenwasserstoffrest bedeutet,
i 0, 1, 2 oder 3 ist und
j 0, 1, 2 oder 3 ist,
mit der Maßgabe, dass die Summe aus i+j kleiner oder gleich 3 ist und in mindestens 50 % der Einheiten der Formel (IV) i gleich 0 oder 1 ist.

2. Masse gemäß Anspruch 1, **dadurch gekennzeichnet, dass** es sich bei Komponente (B) um Silane der Formel (II) und/oder deren Teilhydrolysate handelt.

3. Masse gemäß Anspruch 1 oder 2, **dadurch gekennzeichnet, dass** es sich bei Komponente (C) um Silane der Formel (III) und/oder deren Teilhydrolysate handelt.

4. Masse gemäß einem oder mehreren der Ansprüche 1 bis 3, **dadurch gekennzeichnet, dass** es sich bei Komponente (A) um silanterminierte Polyoxyalkylene handelt.

5. Masse gemäß einem oder mehreren der Ansprüche 1 bis 4, **dadurch gekennzeichnet, dass** es sich vorzugsweise um solche handelt enthaltend
(A) 100 Gewichtsteile silanterminierte Polyoxyalkylene mit Endgruppen der Formel (VI) und einer mittleren Molmasse Mₙ von 10 000 bis 30 000 g/mol,
(B) 0,2 bis 20 Gewichtsteile Silane der Formel (II) und/oder deren Teilhydrolysate,
(C) 0,2 bis 20 Gewichtsteile Silane der Formel (III) und/oder deren Teilhydrolysate,
mit der Maßgabe, dass mindestens 15 % aller Si-Atome in den Komponenten (B) und (C) zu Einheiten der Formeln (II) oder (III) gehören mit e oder h gleich 1,
sowie mindestens eine weitere Komponente ausgewählt aus
(D) 0,2 bis 20 Gewichtsteile Alkoxysilane und
(E) 1 bis 500 Gewichtsteilen Siliconharze,
sowie zusätzlich
gegebenenfalls
(F) Füllstoffe,
gegebenenfalls
(G) Katalysatoren,
gegebenenfalls
(H) Additive und
gegebenenfalls
(I) Zuschlagstoffe.

6. Masse gemäß einem oder mehreren der Ansprüche 1 bis 5, **dadurch gekennzeichnet, dass** es sich vorzugsweise um solche handelt enthaltend
(A) 100 Gewichtsteile lineare silanterminierte Polyoxypropylene, deren Kettenenden zu mindestens 85 % mit Endgruppen der Formel (VI) terminiert sind, und die eine mittlere Molmasse Mₙ von 11 000 bis 22 000 g/mol aufweisen,
(B) 0,5 bis 15 Gewichtsteile Silane der Formel (II) mit e=1 und/oder deren Teilhydrolysate,
(C) 0,5 bis 10 Gewichtsteile Silane der Formel (III) mit h=0 und/oder deren Teilhydrolysate,
sowie mindestens eine weitere Komponente ausgewählt aus
(D) 0,5 bis 10 Gewichtsteile Alkoxysilane, ausgewählt aus der Gruppe bestehend aus Tetraethoxysilan, Vinyltrimethoxysilan, Vinyltriethoxysilan, Vinylmethyldimethoxysilan oder Vinylmethyldiethoxysilan, und
(E) 5 bis 200 Gewichtsteilen Phenylgruppen enthaltende Siliconharze,
sowie zusätzlich
gegebenenfalls
(F) Füllstoffe,
gegebenenfalls
(G) Katalysatoren,
gegebenenfalls
(H) Antioxidantien, UV-Stabilisatoren, Fungizide, Biozide oder Pigmente und
gegebenenfalls
(I) Weichmacher, Rheologieadditive, Flammschutzmittel oder organische Lösungsmittel.

7. Verfahren zur Herstellung der vernetzbaren Massen gemäß einem oder mehreren der Ansprüche 1 bis 6 durch Mischen der einzelnen Komponenten in beliebiger Reihenfolge.

8. Formkörper hergestellt durch Vernetzung der Massen gemäß einem oder mehreren der Ansprüche 1 bis 6 oder hergestellt gemäß Anspruch 7.

9. Verfahren zur Verklebung oder Abdichtung von Substraten, bei denen die Massen gemäß einem oder mehreren der Ansprüche 1 bis 6 oder hergestellt gemäß Anspruch 7 auf die Oberfläche mindestens eines Substrates aufgebracht, diese Oberfläche dann mit dem zu verklebenden zweiten Substrat in Kontakt gebracht und anschließend vernetzen gelassen wird.

10. Verfahren zur Herstellung von Beschichtungen oder Vergüssen, bei denen die Masse gemäß einem oder mehreren der Ansprüche 1 bis 6 oder hergestellt gemäß Anspruch 7 auf mindestens ein Substrat aufgebracht und anschließend vernetzen gelassen wird.

## Claims

1. Crosslinkable compositions (K) comprising
(A) 100 parts by weight of compounds of the formula
Y-[(CR¹₂)_{b}-SiRₐ(OR²)₃₋ₐ]ₓ (I),
where
Y is an x-valent polymer radical bonded via nitrogen, oxygen, sulfur, or carbon,
R may be identical or different and is a monovalent, optionally substituted, SiC-bonded hydrocarbon radical,
R¹ may be identical or different and is hydrogen atom or a monovalent, optionally substituted hydrocarbon radical which may be attached to the carbon atom via nitrogen, phosphorus, oxygen, sulfur, or carbonyl group,
R² may be identical or different and is hydrogen atom or a monovalent, optionally substituted hydrocarbon radical,
x is an integer from 1 to 10,
a may be identical or different and is 0, 1, or 2, and
b may be identical or different and is an integer from 1 to 10,
(B) 0.1 to 30 parts by weight of organosilicon compounds comprising units of the formula
DSi(OR³)_{d}R⁴_{e(3-d-e)/2} (II),
in which
D is a monovalent, SiC-bonded radical with basic nitrogen,
R³ may be identical or different and is hydrogen atom or optionally substituted hydrocarbon radicals,
R⁴ may be identical or different and is an unsubstituted or halogen-substituted, SiC-bonded alkyl radical having 1 to 8 carbon atoms,
d is 0, 1, 2, or 3, and
e is 0, 1, 2, or 3,
the sum total of d+e being less than or equal to 3 and there being at least one radical (OR³) present per molecule,
(C) 0.1 to 30 parts by weight of organosilicon compounds comprising units of the formula
ES i(OR⁵)_{g}R⁶ₕO_{(3-g-h)/2} (III),
in which
E may be identical or different and is a monovalent, SiC-bonded radical having an epoxy function,
R⁵ may be identical or different and is hydrogen atom or optionally substituted hydrocarbon radicals,
R⁶ may be identical or different and is an unsubstituted or halogen-substituted, SiC-bonded alkyl radical having 1 to 8 carbon atoms,
g is 0, 1, 2, or 3, and
h is 0, 1, 2, or 3,
the sum total of g+h being less than or equal to 3 and there being at least one radical (OR⁵) present per molecule,
with the proviso that at least 15% of all of the Si atoms in components (B) and (C) belong to units of the formulae (II) or (III) where e or h is 1, it being immaterial whether components (B) comprising units of the formula (II) with e = 1 or components (C) comprising units of the formula (III) with h = 1, or else both, are used, as long as the proviso specified above is met, and at least one further component, selected from the components
(D) 0.1 to 30 parts by weight of alkoxysilanes which are different from components (B) and (C), and
(E) 1 to 500 parts by weight of silicone resins which are different from components (B) and (C), comprising units of the formula
R⁷i(R⁸O)ⱼSiO_{(4-i-j)/2} (IV),
where
R⁷ may be identical or different and is hydrogen atom or a monovalent, SiC-bonded, optionally substituted hydrocarbon radical,
R⁸ may be identical or different and is hydrogen atom or a monovalent, optionally substituted hydrocarbon radical,
i is 0, 1, 2, or 3, and
j is 0, 1, 2, or 3,
with the proviso that the sum total of i+j is less than or equal to 3 and in at least 50% of the units of the formula (IV) i is 0 or 1.

2. Composition according to Claim 1, **characterized in that** component (B) comprises silanes of the formula (II) and/or their partial hydrolyzates.

3. Composition according to Claim 1 or 2, **characterized in that** component (C) comprises silanes of the formula (III) and/or their partial hydrolyzates.

4. Composition according to one or more of Claims 1 to 3, **characterized in that** component (A) comprises silane-terminated polyoxyalkylenes.

5. Composition according to one or more of Claims 1 to 4, **characterized in that** it is preferably a composition comprising
(A) 100 parts by weight of silane-terminated polyoxyalkylenes having end groups of the formula (VI) and an average molar mass Mₙ of 10 000 to 30 000 g/mol,
(B) 0.2 to 20 parts by weight of silanes of the formula (II) and/or their partial hydrolyzates,
(C) 0.2 to 20 parts by weight of silanes of the formula (III) and/or their partial hydrolyzates,
with the proviso that at least 15% of all the Si atoms in components (B) and (C) belong to units of the formulae (II) or (III) where e or h is 1,
and also at least one further component selected from
(D) 0.2 to 20 parts by weight of alkoxysilanes and
(E) 1 to 500 parts by weight of silicone resins,
and also, additionally,
optionally
(F) fillers,
optionally
(G) catalysts,
optionally
(H) additives, and
optionally
(I) adjuvants.

6. Composition according to one or more of Claims 1 to 5, **characterized in that** it is preferably a composition comprising
(A) 100 parts by weight of linear silane-terminated polyoxypropylenes at least 85% of whose chain ends are terminated by end groups of the formula (VI), and which have an average molar mass Mₙ of 11 000 to 22 000 g/mol,
(B) 0.5 to 15 parts by weight of silanes of the formula (II) where e = 1 and/or their partial hydrolyzates,
(C) 0.5 to 10 parts by weight of silanes of the formula (III) where h = 0 and/or their partial hydrolyzates,
and also at least one further component selected from
(D) 0.5 to 10 parts by weight of alkoxysilanes selected from the group consisting of tetraethoxysilane, vinyltrimethoxysilane, vinyltriethoxysilane, vinylmethyldimethoxysilane, or vinylmethyldiethoxysilane, and
(E) 5 to 200 parts by weight of silicone resins comprising phenyl groups,
and also, additionally,
optionally
(F) fillers,
optionally
(G) catalysts,
optionally
(H) antioxidants, UV stabilizers, fungicides, biocides, or pigments, and
optionally
(I) plasticizers, rheological additives, flame retardants, or organic solvents.

7. Method for producing the crosslinkable compositions according to one or more of Claims 1 to 6 by mixing of the individual components in any order.

8. Molding produced by crosslinking the compositions according to one or more of Claims 1 to 6 or produced according to Claim 7.

9. Method for adhesively bonding or sealing substrates by applying the compositions according to one or more of Claims 1 to 6 or produced according to Claim 7 to the surface of at least one substrate, then contacting said surface with the second substrate to be bonded, and subsequently causing crosslinking to take place.

10. Method for producing coatings or castings by applying the composition according to one or more of Claims 1 to 6 or produced according to Claim 7 to at least one substrate and then causing crosslinking to take place.

## Revendications

1. Compositions réticulables (K), contenant :
(A) 100 parties en poids de composés de formule
Y-(CR¹₂)_{b}-SiRₐ(OR²)₃₋ₐ]ₓ (I)
dans laquelle
Y signifie un radical polymère x-valent, relié par un azote, un oxygène, un soufre ou un carbone,
les R peuvent être identiques ou différents, et représentent un radical hydrocarboné monovalent, éventuellement substitué, relié à SiC,
les R¹ peuvent être identiques ou différents, et représentent un atome d'hydrogène ou un radical hydrocarboné monovalent, éventuellement substitué, qui peut être relié à l'atome de carbone par un azote, un phosphore, un oxygène, un soufre ou un groupe carbonyle,
les R² peuvent être identiques ou différents, et représentent un atome d'hydrogène ou un radical hydrocarboné monovalent, éventuellement substitué,
x est un nombre entier de 1 à 10,
les a peuvent être identiques ou différents, et représentent 0, 1 ou 2, et
les b peuvent être identiques ou différents, et représentent un nombre entier de 1 à 10,
(B) 0,1 à 30 parties en poids de composés d'organosilicium contenant des unités de formule
DSi(OR³)_{d}R⁴ₑO_{(3-d-e)/2} (II)
dans laquelle
D signifie un radical monovalent relié à SiC contenant un azote basique,
les R³ peuvent être identiques ou différents, et signifient un atome d'hydrogène ou des radicaux hydrocarbonés éventuellement substitués,
les R⁴ peuvent être identiques ou différents, et signifient un radical alkyle relié à SiC, non substitué ou à substitution halogène, de 1 à 8 atomes de carbone,
d signifie 0, 1, 2 ou 3, et
e signifie 0, 1, 2 ou 3,
la somme de d+e étant inférieure ou égale à 3, et au moins un radical (OR³) étant présent par molécule,
(C) 0,1 à 30 parties en poids de composés d'organosilicium contenant des unités de formule
ESi(OR⁵)_{g}R⁶ₕO_{(3-g-h)/2} (III)
dans laquelle
les E peuvent être identiques ou différents, et signifient un radical monovalent relié à SiC contenant une fonction époxy,
les R⁵ peuvent être identiques ou différents, et signifient un atome d'hydrogène ou des radicaux hydrocarbonés éventuellement substitués,
les R⁶ peuvent être identiques ou différents, et signifient un radical alkyle relié à SiC, non substitué ou à substitution halogène, de 1 à 8 atomes de carbone,
g signifie 0, 1, 2 ou 3, et
h signifie 0, 1, 2 ou 3,
la somme de g+h étant inférieure ou égale 3, et au moins un radical (OR⁵) étant présent par molécule,
à condition qu'au moins 15 % de tous les atomes Si dans les composants (B) et (C) appartiennent à des unités de formule (II) ou (III) avec e ou h égal à 1, l'utilisation de composants (B) contenant des unités de formule (II) avec e = 1 ou de composants (C) contenant des unités de formule (III) avec h = 1 ou des deux étant sans importance, dans la mesure où la condition mentionnée précédemment est satisfaite,
et au moins un autre composant, choisi parmi les composants
(D) 0,1 à 30 parties en poids d'alcoxysilanes qui sont différents des composants (B) et (C), et
(E) 1 à 500 parties en poids de résines de silicone, qui sont différentes des composants (B) et (C), contenant des unités de formule
R⁷ᵢ(R⁸O)ⱼSiO_{(4-i-j)/2} (IV)
dans laquelle
les R⁷ peuvent être identiques ou différents, et signifient un atome d'hydrogène ou un radical hydrocarboné monovalent, relié à SiC, éventuellement substitué,
les R⁸ peuvent être identiques ou différents, et signifient un atome d'hydrogène ou un radical hydrocarboné monovalent, éventuellement substitué,
i signifie 0, 1, 2 ou 3, et
j signifie 0, 1, 2 ou 3,
à condition que la somme de i+j soit inférieure ou égale à 3, et qu'i soit égal à 0 ou 1 dans au moins 50 % des unités de formule (IV).

2. Composition selon la revendication 1, **caractérisée en ce que** le composant (B) consiste en des silanes de formule (II) et/ou leurs hydrolysats partiels.

3. Composition selon la revendication 1 ou 2, **caractérisée en ce que** le composant (C) consiste en des silanes de formule (III) et/ou leurs hydrolysats partiels.

4. Composition selon une ou plusieurs des revendications 1 à 3, **caractérisée en ce que** le composant (A) consiste en des polyoxyalkylène à terminaison silane.

5. Composition selon une ou plusieurs des revendications 1 à 4, **caractérisée en ce qu'**elle contient de préférence
(A) 100 parties en poids de polyoxyalkylènes à terminaison silane contenant des groupes terminaux de formule (VI) et ayant une masse molaire moyenne Mₙ de 10 000 à 30 000 g/mol,
(B) 0,2 à 20 parties en poids de silanes de formule (II) et/ou leurs hydrolysats partiels,
(C) 0,2 à 20 parties en poids de silanes de formule (III) et/ou leurs hydrolysats partiels,
à condition qu'au moins 15 % de tous les atomes Si dans les composants (B) et (C) appartiennent à des unités de formule (II) ou (III) avec e ou h égal à 1,
ainsi qu'au moins un autre composant choisi parmi
(D) 0,2 à 20 parties en poids d'alcoxysilanes, et
(E) 1 à 500 parties en poids de résines de silicone, ainsi qu'également
éventuellement
(F) des charges,
éventuellement
(G) des catalyseurs,
éventuellement
(H) des additifs, et
éventuellement
(I) des adjuvants.

6. Composition selon une ou plusieurs des revendications 1 à 5, **caractérisée en ce qu'**elle contient de préférence
(A) 100 parties en poids de polyoxypropylènes à terminaison silane linéaires, dont les extrémités de chaîne sont terminées à au moins 85 % avec des groupes terminaux de formule (VI) et qui présentent une masse molaire moyenne Mₙ de 11 000 à 22 000 g/mol,
(B) 0,5 à 15 parties en poids de silanes de formule (II) avec e = 1 et/ou leurs hydrolysats partiels,
(C) 0,5 à 10 parties en poids de silanes de formule (III) avec h = 0 et/ou leurs hydrolysats partiels, ainsi qu'au moins un autre composant choisi parmi
(D) 0,5 à 10 parties en poids d'alcoxysilanes, choisis dans le groupe constitué par le tétraéthoxysilane, le vinyltriméthoxysilane, le vinyltriéthoxysilane, le vinylméthyldiméthoxysilane ou le vinylméthyldiéthoxysilane, et
(E) 5 à 200 parties en poids de résines de silicone contenant des groupes phényle,
ainsi qu'également
éventuellement
(F) des charges,
éventuellement
(G) des catalyseurs,
éventuellement
(H) des antioxydants, des stabilisateurs UV, des fongicides, des biocides ou des pigments, et éventuellement
(I) des plastifiants, des additifs de rhéologie, des agents ignifuges ou des solvants organiques.

7. Procédé de fabrication des compositions réticulables selon une ou plusieurs des revendications 1 à 6 par mélange des composants individuels dans un ordre quelconque.

8. Corps moulé fabriqué par réticulation des compositions selon une ou plusieurs des revendications 1 à 6 ou fabriquées selon la revendication 7.

9. Procédé de collage ou d'étanchéification de substrats, selon lequel les compositions selon une ou plusieurs des revendications 1 à 6 ou fabriquées selon la revendication 7 sont appliquées sur la surface d'au moins un substrat, puis cette surface est mise en contact avec le second substrat à coller, puis les compositions sont laissées réticuler.

10. Procédé de fabrication de revêtements ou de scellements, selon lequel la composition selon une ou plusieurs des revendications 1 à 6 ou fabriquée selon la revendication 7 est appliquée sur au moins un substrat, puis laissée réticuler.
